# EUROPÄISCHE PATENTSCHRIFT

(11) **EP 0 547 409 B1**
(45) Veröffentlichungstag und Bekanntmachung des Hinweises auf die Patenterteilung: **08.03.1995**
(21) Anmeldenummer: 92120011.9
(22) Anmeldetag: 25.11.1992
(51) Int. Cl.: C09K 3/18

(54) **Verfahren zur Herstellung von Alkali-Acetaten**
Process for preparing alkali acetates
Procédé de préparation d'acétates alcalins

(30) Priorität: 14.12.1991 DE 4141300
(43) Veröffentlichungstag der Anmeldung: 23.06.1993
(73) Patentinhaber: HOECHST AKTIENGESELLSCHAFT, 65926 Frankfurt am Main (DE)
(72) Erfinder: Bettermann, Gerhard, Dr., W-5164 Nörvenich (DE); Schimmel, Günther, Dr., W-5042 Erftstadt (DE); Himmrich, Johannes, Dr., W-5030 Hürth-Kendenich (DE)

(56) Entgegenhaltungen:
- EP-A- 0 375 214
- EP-A- 0 483 721
- EP-A- 0 494 506
- DE-A- 4 034 217
- US-A- 4 377 488

## Beschreibung

Die vorliegende Erfindung betrifft ein Verfahren zur Herstellung eines korrosionsinhibierenden flüssigen Enteisungsmittel auf der Basis von Alkali-Acetaten sowie Benzotriazol und/oder Tolyltriazol und/oder Imidazol und Phosphorsäure als Inhibitoren.

Aus der US-PS 4 855 071 ist ein Verfahren zur Herstellung eines Enteisungsmittels bekannt, bei welchem man zunächst aus Erdalkali- oder Alkalibasen oder deren Mischungen und Wasser einen Slurry herstellt. In den Slurry trägt man eine Carbonsäure mit 1 bis 4 Kohlenstoff-Atomen in einer Menge ein, die zur vollständigen Neutralisation der Basen ausreicht sowie soviel Wasser, daß der resultierende Carboxylat-Slurry flüssig und pumpbar ist. Den auf Temperaturen von etwa 40 bis 120°C erhitzten Carboxylat-Slurry verteilt man in dünner Schicht auf Substrat-Teilchen und trocknet schließlich die beschichteten Substrat-Teilchen.

Das flüssige Enteisungsmittel nach der nichtvorveröffentlichten deutschen Patentanmeldung P 40 34 792.3 besteht aus 15 bis 70 Gewichts% Alkaliacetat oder Erdalkaliacetat oder ihren Mischungen, 0,01 bis 1 Gewichts% einer Triazolverbindung oder Imidazolverbindung oder deren Mischungen und Wasser, wobei seine Herstellung durch Zusammenmischen der einzelnen Komponenten erfolgt.

Nachteilig ist bei der aus der deutschen Patentanmeldung bekannten Herstellung, daß Benzotriazol, Tolyltriazol oder Imidazol als Feststoffe in Alkali-Acetat-Lösung eine geringe Löslichkeit und eine niedrige Lösungsgeschwindigkeit aufweisen.

Es ist daher Aufgabe der vorliegenden Erfindung, ein Verfahren zur chargenweisen Herstellung eines flüssigen Enteisungsmittels auf der Basis von Alkali-Acetaten und Inhibitoren anzugeben, wobei im Enteisungsmittel die Inhibitoren homogen verteilt sind. Das wird erfindungsgemäß dadurch erreicht, daß man 30 bis 50 gewichtsprozentige Alkalilauge in einem mit einer Kühleinrichtung und einer Mischeinrichtung versehenen Reaktionsbehälter vorlegt; daß man in den Reaktionsbehälter 85 bis 100 %ige Essigsäure solange eindosiert, bis in ihm das Gewichtsverhältnis von Essigsäure zu Alkalilauge (0,20 bis 0,45) : 1, vorzugsweise (0,30 bis 0,40) : 1,beträgt; daß man einen Teil dieser Lösung aus dem Reaktionsbehälter in einen gerührten Lösebehälter überführt und darin 0,03 bis 1 Gewichts% Benzotriazol und/oder Tolyltriazol und/oder Imidazol, bezogen auf die Charge, auflöst; daß man die azolhaltige Lösung in den Reaktionsbehälter ebenso wie 0,01 bis 0,2 Gewichts% Phosphorsäure, bezogen auf die Charge, einträgt; daß man die Eindosierung von Essigsäure in den Reaktionsbehälter solange fortsetzt, bis die Dichte der Lösung im Reaktionsbehälter bei 20°C 1,07 bis 1,39 g/cm³ beträgt; daß man solange kleine Mengen Alkalilauge oder Essigsäure in den Reaktionsbehälter einführt, bis der pH-Wert der in ihm befindlichen Lösung 9,2 bis 9,8 beträgt und daß man schließlich diese Lösung aus dem Reaktionsbehälter als flüssiges Enteisungsmittel entnimmt.

Das Verfahren gemäß der Erfindung kann weiterhin wahlweise auch noch dadurch ausgestaltet sein, daß
a) man die mit einem pH-Wert von 9,2 bis 9,8 aus dem Reaktionsbehälter entnommene Lösung filtriert;
b) man unter Druck filtriert;
c) man die filtrierte Lösung einem Lagerbehälter zuführt;
d) die Alkalilauge einen Alkaligehalt von 40 bis 45 Gewichts% aufweist;
e) die Phosphorsäure 80 bis 85 Gewichts% H₃PO₄ enthält.

Beim erfindungsgemäßen Verfahren wird die homogene Verteilung von Benzotriazol, Tolyltriazol und/oder Imidazol dadurch erreicht, daß diese Stoffe zunächst in teilneutralisierte Alkalilauge, in der sie sich besonders gut lösen, eingebracht werden, dann als klare Lösung in den Reaktionsbehälter eingeführt wird, bevor der Inhalt des Reaktionsbehälter vollständig neutralisiert wird.

Verwendet man beim Verfahren gemäß der Erfindung chemisch reine Kalilauge und technisch reine Essigsäure, so ist die im Reaktionsbehälter anfallende, pH-Werte zwischen 9,2 und 9,8 aufweisende Lösung wasserklar. Wird jedoch statt chemisch reiner Kalilauge nur technisch reine Kalilauge eingesetzt, so erfolgt eine Ausfällung von Eisenverbindungen, wodurch eine trübe Lösung resultiert, die filtriert werden muß. Da die Eisenverbindungen einen schleimigen Niederschlag bilden, erfolgt die Filtration vorteilhafterweise unter Druck.

### Beispiel 1

In einem Reaktionsbehälter (60 m³) wurden 30 t chemisch reine Kalilauge (45 Gewichts% KOH) vorgelegt und über einen Rohrbündel-Wärmeaustauscher (Austauschfläche: 20 m³) umgepumpt. In die Umpumpleitung wurden an der Saugseite der Pumpe 400 kg/h technisch reine Essigsäure (99,9 % CH₃COOH) 29 Stunden eindosiert. Das Gewichtsverhältnis von Essigsäure zu Kalilauge betrug jetzt 0,39 : 1.

In 0,5 m³ dieser Lösung wurde in einem Rührbehälter 47,3 kg Tolyltriazol aufgelöst und die klare tolyltriazolhaltige Lösung saugseitig zur Pumpe in die Umpumpleitung eingeführt. Anschließend wurden auf dem gleichen Weg 23,6 kg Phosphorsäure (85 Gewichts%) sowie 2,8 t Wasser eingetragen. Schließlich wurde die Eindosierung von 400 kg/h Essigsäure in die Umpumpleitung ca. 7 Stunden fortgesetzt; die Dichte der Lösung im Reaktionsbehälter betrug jetzt 1,275 g/cm³ (bei 20°C). Nach Einführung von weiteren 2,8 t Essigsäure befand sich im Reaktionsbehälter eine wasserklare Lösung mit einem pH-Wert von 9,5 sowie mit einem Tolyltriazol-Gehalt von 0,1 Gewichts% und einem Phosphorsäuregehalt von 0,05 Gewichts%, jeweils bezogen auf die Charge.

### Beispiel 2

Beispiel 1 wurde mit der Änderung wiederholt, daß anstelle des Tolyltriazols 61 kg Benzotriazol in die teilneutralisierte Kalilauge eingetragen wurden.
Die resultierende wasserklare Lösung mit einem pH-Wert von 9,5 enthielt 0,15 Gewichts% Benzotriazol und 0,05 Gewichts% Phosphorsäure, jeweils bezogen auf die Charge.

### Beispiel 3

Beispiel 1 wurde mit der Änderung wiederholt, daß anstelle des Tolyltriazols 95,5 kg Imidazol in die teilneutralisierte Kalilauge eingetragen wurden.
Die resultierende wasserklare Lösung mit einem pH-Wert von 9,5 enthielt 0,2 Gewichts% Imidazol und 0,05 Gewichts% Phosphorsäure, jeweils bezogen auf die Charge.

## Patentansprüche

1. Verfahren zur Herstellung eines korrosionsinhibierenden flüssigen Enteisungsmittels auf der Basis von Alkali-Acetaten sowie Benzotriazol und/oder Tolyltriazol und/oder Imidazol und Phosphorsäure als Inhibitoren, dadurch gekennzeichnet, daß man 30 bis 50 gewichtsprozentige Alkalilauge in einem mit einer Kühleinrichtung und einer Mischeinrichtung versehenen Reaktionsbehälter vorlegt; daß man in den Reaktionsbehälter 85 bis 100 %ige Essigsäure solange eindosiert, bis in ihm das Gewichtsverhältnis von Essigsäure zu Alkalilauge (0,20 bis 0,45) : 1, vorzugsweise (0,30 bis 0,40) : 1, beträgt; daß man einen Teil dieser Lösung aus dem Reaktionsbehälter in einen gerührten Lösebehälter überführt und darin 0,03 bis 1 Gewichts% Benzotriazol und/ oder Tolyltriazol und/oder Imidazol, bezogen auf die Charge, auflöst; daß man die azolhaltige Lösung in den Reaktionsbehälter ebenso wie 0,01 bis 0,2 Gewichts% Phosphorsäure, bezogen auf die Charge, einträgt; daß man die Eindosierung von Essigsäure in den Reaktionsbehälter solange fortsetzt, bis die Dichte der Lösung im Reaktionsbehälter bei 20°C 1,07 bis 1,39 g/cm³ beträgt; daß man solange kleine Mengen Alkalilauge oder Essigsäure in den Reaktionsbehälter einführt, bis der pH-Wert der in ihm befindlichen Lösung 9,2 bis 9,8 beträgt und daß man schließlich diese Lösung aus dem Reaktionsbehälter als flüssiges Enteisungsmittel entnimmt.

2. Verfahren nach Anspruch 1, dadurch gekennzeichnet, daß man die mit einem pH-Wert von 9,2 bis 9,8 aus dem Reaktionsbehälter entnommene Lösung filtriert.

3. Verfahren nach Anspruch 2, dadurch gekennzeichnet, daß man unter Druck filtriert.

4. Verfahren nach Anspruch 2 oder 3, dadurch gekennzeichnet, daß man die filtrierte Lösung einem Lagerbehälter zuführt.

5. Verfahren nach mindestens einem der Ansprüche 1 bis 4, dadurch gekennzeichnet, daß die Alkalilauge einen Alkaligehalt von 40 bis 45 Gewichts% aufweist.

6. Verfahren nach mindestens einem der Ansprüche 1 bis 5, dadurch gekennzeichnet, daß die Phosphorsäure 80 bis 85 Gewichts% H₃PO₄ enthält.

## Claims

1. A process for the preparation of a corrosion-inhibiting liquid de-icing agent based on alkali metal acetates as well as benzotriazole and/or tolyltriazole and/or imidazole and phosphoric acid as inhibitors, which comprises initially introducing a 30 to 50 percent by weight strength alkali metal hydroxide solution into a reaction container provided with a cooling device and a mixing device; metering 85 to 100% strength acetic acid into the reaction container until the ratio by weight of acetic acid to alkali metal hydroxide solution therein is (0.20 to 0.45) : 1, preferably (0.30 to 0.40) : 1; transferring a portion of this solution from the reaction container into a stirred dissolving tank and dissolving therein 0.03 to 1% by weight, relative to the batch, of benzotriazole and/or tolyltriazole and/or imidazole; introducing the solution containing azole and 0.01 to 0.2% by weight, relative to the batch, of phosphoric acid into the reaction container; continuing to meter acetic acid into the reaction container until the density of the solution in the reaction container is 1.07 to 1.39 g/cm³ at 20°C; introducing small amounts of alkali metal hydroxide solution or acetic acid into the reaction container until the pH of the solution therein is 9.2 to 9.8 and finally withdrawing this solution from the reaction container as a liquid de-icing agent.

2. The process as claimed in claim 1, wherein the solution with a pH of 9.2 to 9.8 which is withdrawn from the reaction container is filtered.

3. The process as claimed in claim 2, wherein filtration is performed under pressure.

4. The process as claimed in claim 2 or 3, wherein the filtered solution is fed to a storage tank.

5. The process as claimed in at least one of claims 1 to 4, wherein the alkali metal hydroxide solution has an alkali content of 40 to 45% by weight.

6. The process as claimed in at least one of claims 1 to 5, wherein the phosphoric acid contains 80 to 85% by weight of H₃PO₄.

## Revendications

1. Procédé de préparation d'un produit dégivrant liquide, inhibiteur de corrosion, à base d'acétates alcalins et contenant du benzotriazole et/ou du tolyltriazole et/ou de l'imidazole et de l'acide phosphorique en tant qu'inhibiteurs, caractérisé en ce que l'on introduit une lessive alcaline à une teneur de 30 à 50 % en poids dans un récipient de réaction équipé d'un dispositif de refroidissement et d'un dispositif de mélange ; on introduit dans le récipient de réaction de l'acide acétique à une concentration de 85 à 100 % jusqu'à ce que les proportions relatives en poids entre l'acide acétique et la lessive alcaline soient de 0,20 à 0,45 : 1, de préférence de 0,30 à 0,40 : 1 ; on transfère une partie de cette solution du récipient de réaction dans un récipient de dissolution soumis à agitation et on y dissout 0,03 à 1 % en poids de benzotriazole et/ou de tolyltriazole et/ou d'imidazole, par rapport au chargement ; on introduit la solution contenant les azoles dans le récipient de réaction, avec 0,01 à 0,2 % en poids d'acide phosphorique, par rapport au chargement ; on poursuit l'introduction d'acide acétique dans le récipient de réaction jusqu'à ce que la densité de la solution contenue dans ce récipient soit de 1,07 à 1,39 g/cm³ à 20°C ; on introduit dans le récipient de réaction des petites quantités de lessive alcaline ou d'acide acétique jusqu'à ce que le pH de la solution qui se trouve dans ce récipient soit de 9,2 à 9,8 et, finalement, on évacue cette solution du récipient de réaction en tant que produit dégivrant liquide.

2. Procédé selon la revendication 1, caractérisé en ce que l'on filtre la solution évacuée du récipient de réaction à un pH de 9,2 à 9,8.

3. Procédé selon la revendication 2, caractérisé en ce que l'on filtre sous pression.

4. Procédé selon la revendication 2 ou 3, caractérisé en ce que l'on envoie la solution filtrée à un réservoir de stockage.

5. Procédé selon au moins une des revendications 1 à 4, caractérisé en ce que la lessive alcaline est à une teneur en alcali de 40 à 45 % en poids.

6. Procédé selon au moins une des revendications 1 à 5, caractérisé en ce que l'acide phosphorique est à une teneur de 80 à 85 % en poids de H₃PO₄.
